# EUROPÄISCHE PATENTSCHRIFT

(11) **EP 2 018 260 B1**
(45) Veröffentlichungstag und Bekanntmachung des Hinweises auf die Patenterteilung: **26.06.2013**
(21) Anmeldenummer: 07728656.5
(22) Anmeldetag: 30.04.2007
(51) Int. Cl.: B29C 45/14, B29C 45/16, B29C 44/12, B29L 31/30, B29K 75/00

(54) **VERFAHREN ZUR HERSTELLUNG EINES MEHRSCHICHTTEILES**
METHOD FOR PRODUCING A MULTI-LAYER PART
PROCÉDÉ POUR PRODUIRE UNE PIÈCE MULTICOUCHE

(30) Priorität: 05.05.2006 DE 102006021021
(43) Veröffentlichungstag der Anmeldung: 28.01.2009
(73) Patentinhaber: KraussMaffei Technologies GmbH, 80997 München (DE)
(72) Erfinder: ZWIESELE, Jochen, 80997 München (DE); SIEVERDING, Matthias, Newton, NC 28658 (US); MITZLER, Jochen, 85221 Dachau (DE); GRUBER, Marco, 81247 München (DE)
(74) Vertreter: Wilhelm, Ludwig
(86) Internationale Anmeldenummer: PCT/EP2007/054202
(87) Internationale Veröffentlichungsnummer: WO 2007/128722

(56) Entgegenhaltungen:
- WO-A-00/73040
- WO-A-2005/035218
- WO-A-2005/065935
- DE-A1-102004 007 865
- DE-A1-102004 033 139

## Beschreibung

Die vorliegende Erfindung betrifft ein Verfahren zur Herstellung eines Mehrschichtteiles gemäß dem Oberbegriff des Anspruchs 1.

Die Herstellung von aus mehreren Schichten oder Materialkomponenten bestehenden Teilen, oftmals auch Sandwichteile genannt, ist hinlänglich bekannt. Dabei werden oftmals verschiedene Materialschichten nacheinander aufgetragen oder verschiedene Komponenten mit mehreren Schichten zusammengefügt.

Vorliegend geht es um die Herstellung eines Mehrschichtteiles aus verschiedenen Kunststoffkomponenten, wobei die verschiedenen Schichten jeweils unterschiedliche Materialeigenschaften besitzen. Eine Trägerkomponente soll der gesamten Struktur den notwendigen Halt geben. Eine Oberflächenkomponente stellt ein gewünschtes Dekor oder eine gewünschte Oberflächenbeschaffenheit zur Verfügung und ist vorzugsweise hart und kratzunempfindlich ausgebildet. Die Oberflächenschicht sollte über eine Zwischenschicht auf der Trägerkomponente befestigt sein, wobei die Zwischenschicht vorzugsweise aus einem Polyurethan-Material, insbesondere einem Polyurethan-Schaummaterial, besteht und somit weicher als die Oberflächenkomponente ausgebildet ist. Auf diese Weise kann man beispielsweise Exterieurteile für ein Kraftfahrzeug herstellen, bei dem die Oberfläche gegen Witterungseinflüsse und andere externe Einflüsse möglichst unempfindlich ist. Auf der anderen Seite sollte aufgrund der weichen darunter liegenden Zwischenkomponente eine gewisse Verformbarkeit möglich sein, die beispielsweise im Zusammenhang mit dem Schutz von Fußgängern eine besondere Bedeutung hat. Auch andere Anwendungen sind vorstellbar, bei denen eine gewisse Deformierbarkeit der Oberflächenschicht bei fester Grundstruktur gewünscht ist.

Die oben beschriebene Ausführungsform kann aber auch für Interieur Bauteile verwendet werden. Dabei ist es möglich, statt einer Folie ein Dekor oder eine Dekorfolie zu verwenden. Vorteilhafterweise erhält man dann einen Softtouch-Effekt. Die Dekore können mit niedrigem Druck mit dem Trägerbauteil "verklebt" werden. Die stellt einen großen Vorteil gegenüber dem Hinterspritzen mit hohem Innendruck und einer dadurch möglichen Dekorschädigung oder gegenüber einem aufwendigen Hinterprägevorgang dar. Überdies können kostengünstige Folien verwendet werden.

In der DE 10 2004 007 865 A1 ist ein Verfahren nach dem Oberbegriff von Anspruch 1 beschrieben. Bei diesem Verfahren erfolgt die Herstellung eines Polyurethan enthaltenden Verbundelements mittels Vakuumtechnik, wobei nach der Einbringung einer Außenschicht in ein Formteil ein Polyurethansystem entweder in eine offene oder eine geschlossene Form eingebracht wird. Dabei werden die Außenschicht und eine evtl. noch vorhandene Trägerschicht beim Schäumprozess des Polyurethansystems in einem Abstand zueinander gehalten.

In der WO 2005/065935 A1 wird ebenfalls ein Polyurethan-Material den Kavitätsraum einer geschlossenen Schäumform eingebracht, wobei in der Schäumform bereits ein Thermoplastmaterial sowie ein Dekormaterial eingelegt sein können. Das Thermoplastmaterial und das Dekormaterial werden ebenso wie in der DE 2004 007 865 A1 in einem Abstand zueinander gehalten.

Die WO 2005/035218 A1 beschreibt eine Spritzgießmaschine deren Schließeinheit eine Dreheinrichtung mit einer Zwischenplatte umfasst, so dass zwei Werkzeuge zwischen den jeweiligen Platten anordenbar sind. In den Kavitäten der Werkzeuge kann ein herzustellendes Mehrkomponenten-Produkt in zwei Verfahrensschritten sukzessive gebildet werden.

Eine Schließeinheit mit einem ebenfalls drehbaren Mittelteil ist in der WO 00/73040 offenbart. Dabei sind auch in diesem Werkzeug dieser Schließeinheit mehrere Kavitäten ausbildbar, in denen in aufeinanderfolgenden Verfahrensschritten eine Mehrkomponenten-Produkt ausgebildet werden kann.

Die WO 03/013824 A1 offenbart eine Formschließvorrichtung einer Spritzgießmaschine zur Herstellung von aus zwei oder mehreren Kunststoffkomponenten bestehenden Kunststoffteilen.

Aufgabe der vorliegenden Erfindung ist es, ein Verfahren anzugeben, mit dem ein eingangs beschriebenes Mehrschichtteil besonders effizient und kostengünstig, aber auch bezüglich seiner gewünschten Eigenschaften passgenau hergestellt werden kann.

Diese Aufgabe wird durch die im Anspruch 1 angegebenen Merkmale verfahrensmäßig gelöst. Vorteilhafte Weiterbildungen sind Gegenstand der abhängigen Ansprüche.

Erfindungsgemäß wird eine Oberflächenkomponente in einem bestimmten Abstand zu einer zuvor in einem ersten Schritt hergestellten Trägerkomponente positioniert und in den Zwischenraum zwischen der Trägerkomponente und der Oberflächenkomponente wird zyklusgleich zum ersten Schritt ein Polyurethan-Material eingefüllt.

Die Oberflächenkomponente ist vorzugsweise so ausgewählt, dass sie hart, witterungsbeständig und kratzfest ist. Insbesondere können dabei besondere Kunststoffmaterialien oder auch dünne Metalle, wie Aluminium, Edelstahl oder dergleichen ausgewählt sein. Das Polyurethan-Material soll vorzugsweise ein geschäumtes Material oder ein schaumbildendes Material sein, wobei sich der Schaum auch während oder nach dem Eintrag der Polyurethan-Komponente in den Zwischenraum ausbilden kann.

Ein Ausführungsbeispiel der vorliegenden Erfindung wird nachfolgend mit Bezug auf die Zeichnung näher erläutert. Die Zeichnung zeigt in
- Figur 1: eine Vorrichtung in schematischer Darstellung zur Durchführung des erfindungsgemäßen Verfahrens und
- Figur 2: einen vergrößerten Detailschnitt durch das zweite Formwerkzeug mit dem hergestellten Mehrschichtteil.

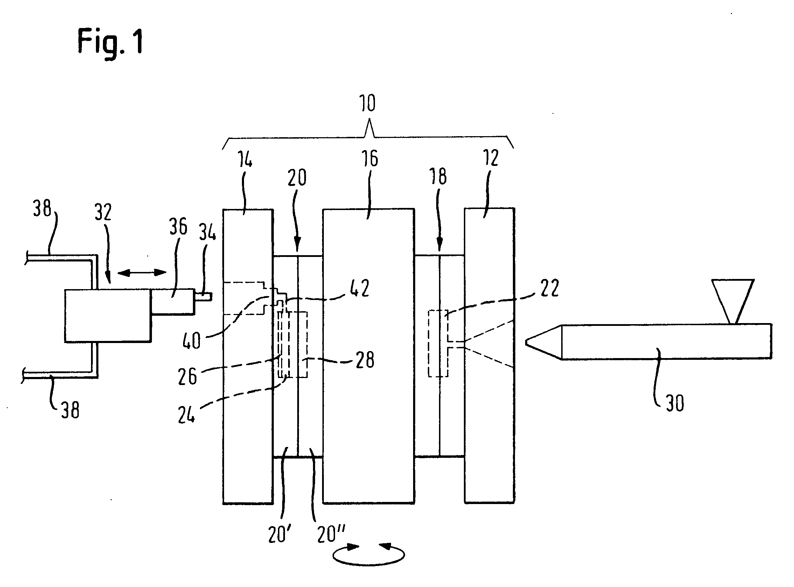

In Figur 1 ist zentral eine Schließeinheit mit zwei äußeren Aufspannplatten 12 und 14 schematisch dargestellt, wobei die beiden äußeren Aufspannplatten 12, 14 relativ aufeinander zu und voneinander weg bewegt werden können. Dies ist aus dem Stand der Technik hinlänglich bekannt und muss vorliegend nicht näher beschrieben werden.

Zwischen den beiden Aufspannplatten 12 und 14 ist eine Zwischenplatte 16 in Form einer drehbaren Wendeplatte angeordnet. Die Drehbarkeit um eine vertikale Achse ist mit dem Doppelpfeil angedeutet. Zwischen der Aufspannplatte 12 und der Wendeplatte 16 ist ein erstes Formwerkzeug 18, und zwischen der Wendeplatte 16 und der Aufspannplatte 14 ein zweites Formwerkzeug 20 angeordnet. Beide Formwerkzeuge 18 und 20 bestehen aus zwei Formhälften, wobei lediglich die beiden Formhälften 20' und 20" des Formwerkzeugs 20 näher bezeichnet sind. Wie strichliniert skizziert ist, befinden sich zwischen den in Figur 1 jeweils geschlossenen Formwerkzeugen 18 und 20 jeweils Formhohlräume 22 und 24 (auch Kavitäten genannt), die zur Ausbildung eines Kunststoffproduktes - wie nachfolgend näher dargestellt - geeignet sind. In Figur 1 rechts dargestellt ist eine Plastifizier- und Einspritzeinheit 30 nur schematisch angedeutet. Die Plastifizier- und Einspritzeinheit 30 ist zur Verarbeitung eines Thermoplastmaterials geeignet, welches über den Trichter eingeführt, in der Einheit 30 aufgeschmolzen und homogenisiert wird und über eine Einspritzdüse an der vorderen Spitze der Einheit 30 nach einem Andocken an das Formwerkzeug 18 in die Kavität 22 eingespritzt wird.

Auf der linken Seite in Figur 1 ist eine Polyurethan-Einheit 32 dargestellt, die einen Mischkopf 36 mit einem Auslassrohr 34 umfasst. Zum Mischkopf 36 sind zwei Komponentenleitungen 38 geführt, die den Mischkopf mit den beiden Polyurethan-Komponenten Isocyanat und Polyol versorgen. Diese beiden Komponenten werden im Mischkopf zu einem reaktiven Gemisch vermischt und über das Austragsrohr 34 ausgetragen.

Bei dem Betrieb der Polyurethan-Einheit 32 wird diese an den Angussbereich 40 der Aufschäumplatte 14 angedockt, und zwar derart, dass eine dichte Strömungsverbindung zwischen dem Auslassrohr 34 und einem Transferkanal 42 gebildet ist, der sich in der Formhälfte 20' vom Angussbereich 40 bis zur Kavität 24 sich erstreckt.

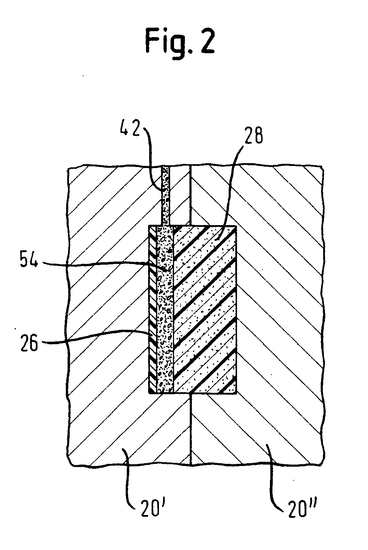

In Figur 1 nur schematisch, in Figur 2 in vergrößertem Umfang angedeutet, befindet sich in der Kavität 24 das im Schritt vorher hergestellte Thermoplast-Formteil 28, welches die Trägerkomponente bildet. Überdies ist bereits vor dem Schließen des Formwerkzeugs 20 in die offene Kavität der Formhälfte 20' ein Einlegeteil 26 eingefügt worden, welches die Oberflächenkomponente bildet. Dieses Einlegeteil 26 ist z.B. eine sehr witterungs- und kratzbeständige Kunststofffolie.

Nach dem Zusammenfahren der beiden Werkzeughälften 20' und 20" ist der Zwischenraum zwischen dem Thermoplastteil 28 und dem Einlegerteil 26 gebildet, in welchen über den Transferkanal 42 die in dem Mischkopf hergestellte Polyurethan-Komponente 54 eingefüllt werden kann.

Die gesamte Verfahrensweise ist zusammenfassend wie folgt: Im geschlossenen Zustand der Schließeinheit 10 wird die Plastifizier- und Einspritzeinheit 30 in der Weise betrieben, dass ein Thermoplast-Material aufgeschmolzen und mittels der an das Formwerkzeug 18 herangefahrenen Einheit 30 das sich in einem Schneckenraum gesammelte Material in die Kavität 22 eingespritzt wird.

Nach dem Abkühlen und damit Aushärten des Thermoplast-Materials in der Kavität 22 wird die Schließeinheit so weit geöffnet, so dass ein ausreichender Raum zur Drehung der Wendeplatte 16 entsteht. Daraufhin wird die Wendeplatte 16 um 180° gedreht, wobei das die Trägerkomponente bildende Thermoplastteil in der an der Wendeplatte befestigten Formhälfte mitdreht. Die in Figur 1 dargestellte Formhälfte 20" kommt dabei auf der anderen Seite der Wendeplatte zu liegen.

Beim erneuten Schließen der Schließeinheit ist das Thermoplast-Produkt nunmehr in der Kavität 24 des in Figur 1 dargestellten Formwerkzeugs 20 aufgenommen. Da diese Kavität 24 größer ausgebildet ist als die Kavität 22, bleibt noch ein Leerraum zwischen der Kavitätsoberfläche und dem Thermoplastprodukt 28.

Gleichzeitig mit dem Drehen der Wendeplatte wird in die Kavität der Werkzeughälfte 20' das Einlegeteil eingelegt, so dass sich nach dem Schließen der Schließeinheit der Zwischenraum zwischen dem Einlegeteil 26 und dem Thermoplast-Material ausbilden kann. Das Einlegeteil kann dabei beispielsweise mittels Vakuum genau positioniert gehalten sein.

Füllt man nun das einen weichen Schaum bildende Polyurethan-Material in den Zwischenraum ein, so ist - nach dem Aushärten - ein Mehrschichtteil mit einer harten Oberfläche und einer weichen darunter liegenden Struktur gebildet, die jedoch ihre Stabilität insgesamt von der Trägerkomponente her erhält.

Diese Teile eignen sich in besonderer Weise überall dort, wo stabile Strukturen mit einer widerstandsfähigen Oberfläche, die jedoch insgesamt nachgiebig ausgebildet sein sollte, benötigt werden.

**Bezugszeichenliste**

| | |
|---|---|
| 10 | Schließeinheit |
| 12 | Aufspannplatte |
| 14 | Aufspannplatte |
| 16 | Zwischenplatte als Wendeplatte |
| 18 | Formwerkzeug 1 |
| 20 | Formwerkzeug 2 |
| 20', 20" | Werkzeughälften des Formwerkzeugs 2 |
| 22 | Kavität im Formwerkzeug 1 |
| 24 | Kavität im Formwerkzeug 2 |
| 26 | Einlegeteil |
| 28 | Spritzgussteil |
| 30 | Plastifizier- und Einspritzeinheit |
| 32 | Polyurethan-Einheit |
| 34 | Auslaufrohr |
| 36 | Mischkopf |
| 38 | Komponenten-Zufuhr |
| 40 | PUR-Angussbereich |
| 42 | PUR-Kanal |
| 50 | Thermoplastprodukt |
| 52 | Einlegeteil |
| 54 | Polyurethanfüllung |

## Patentansprüche

1. Verfahren zur Herstellung eines Mehrschichtteiles bestehend aus einer Träger-komponente, einer Oberflächenkomponente und einer weicheren Zwischenkomponente zwischen der Trägerkomponente und der Oberflächenkomponente, wobei eine Oberflächenkomponente zur Trägerkomponente in einem Abstand positioniert wird und der Zwischenraum zwischen der Trägerkomponente und der Oberflächenkomponente mit einem Polyurethan-Material ausgefüllt wird und wobei beim Ausfüllen des Zwischenraums die Oberflächenkomponente wie auch die Trägerkomponente in einem Formhohlraum aufgenommen sind,
**dadurch gekennzeichnet, dass**
in einem ersten Schritt in einer Schließeinheit, welche zwei Aufspannplatten und eine Zwischenplatte in Form einer drehbaren Wendeplatte aufweist, die Trägerkomponente aus einem Thermoplastmaterial mit einem Spritzgießverfahren in einem ersten Formhohlraum (22) hergestellt wird,
nachfolgend die Schließeinheit so weit geöffnet wird, dass ein ausreichender Raum zur Drehung der Wendeplatte (16) entsteht,
anschließend die Wendeplatte um 180° gedreht wird, wobei das die Trägerkomponente bildende Thermoplastteil in einer an der Wendeplatte befestigten Formhälfte (20") mitdreht,
gleichzeitig mit dem Drehen der Wendeplatte die Oberflächenkomponente in eine an einer Aufspannplatte (14) befestigte Formhälfte (20') eingelegt wird, die mit der an der Wendeplatte befestigten Formhälfte (20") einen zweiten Formhohlraum (24) bildet, welcher größer als der erste Formhohlraum (22) ist, und
die Positionierung der Oberflächenkomponente zur Trägerkomponente und das Ausfüllen des Zwischenraums zwischen der Trägerkomponente und der Oberflächenkomponente mit dem Polyurethan-Material zyklusgleich zum ersten Schritt vorgenommen wird.

2. Verfahren nach Anspruch 1,
**dadurch gekennzeichnet,**
**dass** als Polyurethan-Material ein geschäumtes oder einen Schaum bildendes Polyurethan-Material verwendet wird.

3. Verfahren nach einem der vorhergehenden Ansprüche,
**dadurch gekennzeichnet,**
**dass** als Oberflächenkomponente eine Folie oder eine Dekorschicht verwendet ist.

4. Verfahren nach Anspruch 3,
**dadurch gekennzeichnet,**
**dass** die Oberflächenkomponente aus einem Kunststoffmaterial, einer Kunststoffmischung oder einem Metall besteht.

5. Verfahren nach einem der vorhergehenden Ansprüche,
**dadurch gekennzeichnet,**
**dass** ein Einlegerelement, insbesondere eine Folie, in den Formhohlraum eingelegt wird, das als Abdichtung der beiden Formwerkzeughälften dient.

6. Verfahren nach einem der vorhergehenden Ansprüche,
**dadurch gekennzeichnet,**
**dass** in einem ersten Schritt mehrere Trägerkomponenten hergestellt werden, dass gleichzeitig oder nachfolgend in eine entsprechende Anzahl von Formwerkzeugkavitäten Oberflächenkomponenten eingelegt und zu den Trägerkomponenten in einem Abstand positioniert werden und
**dass** der Zwischenraum zwischen den Trägerkomponenten und der Oberflächenkomponenten mit einem Polyurethan-Material ausgefüllt wird.

## Claims

1. A method for the production of a multi-layer part consisting of a support component, a surface component and a softer intermediate component between the support component and the surface component, wherein a surface component is positioned at a distance from the support component and the intermediate space between the support component and the surface component is filled with a polyurethane material, and wherein on filling the intermediate space the surface component and also the support component are received in a mould cavity,
**characterized in that**
in a first step, in a clamping unit which has two mounting plates and an intermediate plate in the form of a rotatable turnover plate, the support component is produced from a thermoplastic material by an injection moulding method in a first mould cavity (22),
subsequently the clamping unit is opened so wide that a sufficient space is produced for the rotation of the turnover plate (16),
then the turnover plate is turned through 180°, wherein the thermoplastic part forming the support component co-rotates in a mould half (20") fastened to the turnover plate,
simultaneously with the rotating of the turnover plate, the surface component is inserted into a mould half (20') fastened to a mounting plate (14), which forms with the mould half (20") fastened to turnover plate a second mould cavity (24), which is greater than the first mould cavity (22), and
the positioning is carried out of the surface component to the support component and the filling of the intermediate space between the support component and the surface component with the polyurethane material in an identical manner with regard to cycle to the first step.

2. The method according to Claim 1,
**characterized in that**
a foamed or a foam-forming polyurethane material is used as polyurethane material.

3. The method according to one of the preceding claims,
**characterized in that**
a film or a decorative layer is used as surface component.

4. The method according to Claim 3,
**characterized in that**
the surface component consists of a plastic material, a plastic mixture or a metal.

5. The method according to one of the preceding claims,
**characterized in that**
an insert element, in particular a film, is inserted into the mould cavity, which serves for sealing the two mould halves.

6. The method according to one of the preceding claims,
**characterized in that**
in a first step, several support components are produced, that simultaneously or subsequently surface components are inserted into a corresponding number of mould cavities and are positioned at a distance from the support components and
that the intermediate space between the support components and the surface components is filled with a polyurethane material.

## Revendications

1. Procédé pour produire une pièce multicouches composée d'une composante porteuse, d'une composante de surface et d'une composante intermédiaire plus souple entre la composante porteuse et la composante de surface, sachant qu'une composante de surface est positionnée à distance de la composante porteuse et que l'espace intermédiaire entre la composante porteuse et la composante de surface est rempli avec un matériau polyuréthane, et sachant que lorsque l'on remplit l'espace intermédiaire, la composante de surface comme la composante porteuse sont reçues dans une cavité de moule,
**caractérisé en ce que**
dans une première étape, dans une unité de fermeture qui présente deux plaques de serrage et une plaque intermédiaire en forme de plaque réversible rotative, la composante porteuse est fabriquée dans un matériau thermoplastique par un procédé de moulage par injection dans une première cavité de moule (22),
ensuite, l'unité de fermeture est ouverte en grand de manière à produire un espace suffisant pour faire tourner la plaque réversible (16),
enfin, la plaque réversible est tournée à 180°, sachant que la pièce thermoplastique formant la composante porteuse tourne conjointement dans une moitié de moule (20") fixée à la plaque réversible,
parallèlement avec la rotation de la plaque réversible, la composante de surface est placée dans une moitié de moule (20') fixée sur une plaque de serrage (14), laquelle forme avec la moitié de moule (20") fixée à la plaque réversible, une deuxième cavité de moule (24) qui est plus grande que la première cavité de moule (22), et
le positionnement de la composante de surface par rapport à la composante porteuse et le remplissage de l'espace intermédiaire entre la composante porteuse et la composante de surface avec le matériau polyuréthane est effectué à égalité de cycle par rapport à la première étape.

2. Procédé selon la revendication 1,
**caractérisé en ce qu'**
un matériau polyuréthane moussé ou formant une mousse est employé en tant que matériau polyuréthane.

3. Procédé selon l'une des revendications précédentes,
**caractérisé en ce qu'**
un film ou une couche décorative est employé(e) en tant que composante de surface.

4. Procédé selon la revendication 3,
**caractérisé en ce que**
la composante de surface est composée d'un matériau plastique, d'un mélange de plastiques ou d'un métal.

5. Procédé selon l'une des revendications précédentes,
**caractérisé en ce qu'**
un élément d'insertion, en particulier un film, est inséré dans la cavité de moule, lequel sert d'étanchéité aux deux moitiés de moule.

6. Procédé selon l'une des revendications précédentes,
**caractérisé en ce que**
dans une première étape, plusieurs composantes porteuses sont fabriquées, que parallèlement ou à la suite, des composantes de surface sont placées dans un nombre correspondant de cavités de moule et positionnées à distance des composantes porteuses et que l'espace intermédiaire entre les composantes porteuses et les composantes de surface est rempli avec un matériau polyuréthane.
